# EUROPÄISCHE PATENTSCHRIFT

(11) **EP 3 137 362 B1**
(45) Veröffentlichungstag und Bekanntmachung des Hinweises auf die Patenterteilung: **16.01.2019**
(21) Anmeldenummer: 15710106.4
(22) Anmeldetag: 06.03.2015
(51) Int. Cl.: B61K 9/12

(54) **RADSATZMESSVORRICHTUNG FÜR RADSÄTZE VON SCHIENENFAHRZEUGEN**
WHEELSET MEASUREMENT DEVICE FOR WHEELSETS OF RAIL VEHICLES
DISPOSITIF DE MESURE D'ESSIEUX DE VÉHICULES FERROVIAIRES

(30) Priorität: 30.04.2014 DE 102014006192
(43) Veröffentlichungstag der Anmeldung: 08.03.2017
(73) Patentinhaber: Industrie-Partner GmbH Radebeul-Coswig, 01640 Coswig (DE)
(72) Erfinder: HOCK, Ralf, 09112 Chemnitz (DE); BÖHME, Mario, 01219 Dresden (DE); FRANZ, Jörg, 01139 Dresden (DE)
(74) Vertreter: Lelgemann, Karl-Heinz
(86) Internationale Anmeldenummer: PCT/EP2015/000511
(87) Internationale Veröffentlichungsnummer: WO 2015/165560

(56) Entgegenhaltungen:
- WO-A2-00/05120
- FR-A- 1 559 379

## Beschreibung

Die Erfindung bezieht sich auf eine Radsatzmessvorrichtung für Radsätze von Schienenfahrzeugen, nach dem Oberbegriff des Patentanspruchs 1.

Aus dem Stand der Technik sind Unterflur-Radsatzdrehmaschinen mit entsprechender Messtechnik bekannt. Diese Unterflur-Radsatzdrehmaschinen sind üblicherweise als ortsfeste Anlagen in einer Grube verbaut. Es sind auch Ausführungsformen derartiger Unterflur-Radsatzdrehmaschinen bekannt, die als mobile Maschinen gestaltet sind und die unter angehobenen Schienenfahrzeugen arbeiten. Üblicherweise werden derartige Unterflur-Radsatzdrehmaschinen zur Reprofilierung von Radsätzen eingesetzt. Zum technischen Umfeld wird auf die DE-B3-10352166 und die FR-A-1559379 verwiesen.

Des Weiteren sind aus dem Stand der Technik Messvorrichtungen bekannt, die der Radsatzvermessung und der Zustandserfassung von Radsätzen dienen und die im Gleis als dort montierte Vorrichtungen ausgestaltet sind. Mittels dieser Vorrichtungen lassen sich die zu erfassenden Daten während der Überfahrt des Schienenfahrzeuges über den betreffenden Gleisabschnitt erfassen. Diese Vorrichtungen bedingen einen hohen Investitionsaufwand zum einen in der Messtechnik selbst und zum anderen in der Fundamentierung und separaten Gleisanbindung. Daher werden diese Vorrichtungen üblicherweise lediglich für Hochgeschwindigkeitszüge eingesetzt.

Der Erfindung liegt die Aufgabe zugrunde, eine Radsatzmessvorrichtung für Radsätze von Schienenfahrzeugen zur Verfügung zu stellen, die in flexibler Weise mit einem geringen Aufwand einsetzbar ist und die zu zuverlässigen Messergebnissen bezüglich des betriebssicheren Zustands und bezüglich der Einhaltung von Betriebsgrenzmaßen von Radsätzen führt.

Diese Aufgabe wird erfindungsgemäß durch eine Radsatzmessvorrichtung gelöst, die neben dem Merkmalen im Oberbegriff des Patentanspruchs 1 auch die in dessen kennzeichnenden Teil angegebenen Merkmale hat. Entsprechend besteht die erfindungsgemäße Radsatzmessvorrichtung aus den beiden als mobile Geräte ausgestalteten Vorrichtungsteileinheiten, die jeweils leicht an den Radsatz von beiden Seiten herangeschoben und dort positioniert werden können. Voraussetzung hierfür ist lediglich eine in üblicherweise bei ebenen Werkstattböden vorhandene Flurfläche zwischen den Gleisen und Gleisgruben. Da beide Vorrichtungsteileinheiten als Radsatzfreihebevorrichtung und zumindest eine Vorrichtungsteileinheit als Radsatzdreh- und -messvorrichtung ausgebildet sind, kann die derart ausgestaltete bzw. geschaffene Radsatzfreihebe-, -dreh- und -messvorrichtung mit äußerst geringem zeitlichen und technischen Aufwand zur Erfassung von Radsatzparametern eingesetzt werden.

Um den zeitlichen Aufwand für die Überprüfung der Radsätze weiter zu reduzieren, ist es vorteilhaft, wenn beide Vorrichtungsteileinheiten der Radsatzfreihebe-, -dreh- und -messvorrichtung als Radsatzfreihebe- und -messvorrichtung und zumindest eine Vorrichtungsteileinheit als Radsatzdrehvorrichtung ausgebildet sind bzw. ist.

Gemäß einer vorteilhaften Ausführungsform weisen beide Vorrichtungsteileinheiten jeweils ein integriertes Fahrwerk auf, mittels dem die beiden Vorrichtungsteileinheiten flurverfahr- und seitlich an den Radsatz heranfahrbar sind.

Die Fahrwerke sind vorteilhaft als Gabelhubwagen vorgesehen, deren distale Gabelenden Stützpranken mit einem Gegenprofil, vorzugsweise einem Schienenkopf-Gegenprofil aufweisen, mittels denen die Vorrichtungsteileinheiten in Richtung einer Radsatzachse positionierbar sind.

Um einen gleichmäßig erfolgenden Abfluss von durch die erfindungsgemäße Radsatzfreihebe-, -dreh- und -messvorrichtung aufgenommenen Stützkräften zu gewährleisten, ist es vorteilhaft, wenn die Vorrichtungsteileinheiten bzw. deren Fahrwerke so ausgebildet sind, dass sie bei ihrer Positionierung in bezug auf den Radsatz großflächig auf der Flurfläche abstützbar sind.

Bei nicht ebenerdig eingelassenen Schienen bzw. aufgeständerten Schienen können die Fahrwerke entsprechend angepasst werden, was vorteilhaft mittels Flurabstützadaptern realisiert werden kann.

Um den zu überprüfenden Radsatz in der gewünschten Weise in eine Rotationsbewegung versetzen zu können, ist es vorteilhaft, wenn jede als Radsatzdrehvorrichtung ausgebildete Vorrichtungsteileinheit zumindest eine, vorzugsweise zwei Radsatzantriebsrollen aufweist, die ggf. synchron an eine Lauffläche eines der betreffenden Vorrichtungsteileinheit zugeordneten Rades des Radsatzes anstellbar sind und mittels der bzw. denen der Radsatz drehbar ist. Hierbei kann die betreffende Vorrichtungsteileinheit in Bezug auf den Radsatz zentriert angeordnet werden.

Um den Radsatz mit einem vergleichsweise geringen Aufwand freiheben zu können, ist es vorteilhaft, wenn die Vorrichtungsteileinheiten der erfindungsgemäßen Radsatzfreihebe-, -dreh- und -messvorrichtung jeweils einen Hubzylinder mit Aufnahme aufweisen, mittels denen der Radsatz an seinen Radsatzlagern aufnehm- und freihebbar ist, wobei die Radsatzantriebsrollen zur Aufrechterhaltung ihrer Anlage an die Lauffläche des ihnen zugeordneten Rades des Radsatzes in Kraftführung nachführbar sind.

Um die sichere Aufnahme der Radsatzlager auf dem Hebezylinder sicherzustellen und um Verfälschungen des Prüf- bzw. Messergebnisses auszuschließen, ist es zweckmäßig, wenn die Radsatzantriebsrollen jeder als Radsatzdrehvorrichtung ausgebildeten Vorrichtungsteileinheit mittels Rollenträgern gehaltert sind, die ihrerseits schwimmend lagerbar sind. Hierdurch ist es möglich, dass die Radsatzantriebsrollen etwaigen Unrundheiten des Rades folgen können.

Bei einer nicht als Radsatzdrehvorrichtung ausgestalteten Vorrichtungsteileinheit der erfindungsgemäßen Radsatzfreihebe-, -dreh- und -messvorrichtung können bezüglich der Positionierung gleichartige Vorteile wie bei der als Radsatzdrehvorrichtung ausgestalteten Vorrichtungsteileinheit erreicht werden, wenn die nicht als Radsatzdrehvorrichtung ausgebildete Vorrichtungsteileinheit nicht angetriebene, in Anlage an die Lauffläche des ihr zugeordneten Rades des Radsatzes bringbare Mitlaufrollen aufweist.

Sofern Radsätze an einem Schienenfahrzeug mit mechanisch gekoppelten Radsätzen freizuheben und zu überprüfen sind, ist es zweckmäßig, wenn bei der erfindungsgemäßen Radsatzfreihebe-, -dreh- und -messvorrichtung die Anzahl ihrer Vorrichtungsteileinheiten an die Anzahl der Räder der mechanisch gekoppelten Radsätze anpassbar ist. Bei z.B. drei miteinander mechanisch gekoppelten Radsätzen können dann entsprechend sechs Vorrichtungsteileinheiten zum Einsatz kommen.

Gemäß einer vorteilhaften Ausführungsform der erfindungsgemäßen Radsatzfreihebe-, -dreh- und -messvorrichtung weisen deren Vorrichtungsteileinheiten optische und/oder mechanische Messglieder auf, mittels denen beim zu prüfenden Radsatz ein Rad-Rückenabstand, ein Raddurchmesser in der Laufkreisebene an beiden Radscheiben, eine Rundlaufabweichung in der Laufkreisebene an beiden Rädern, ein Vorhandensein und ein Ausmaß von Flachstellen, ein Radprofil an beiden Rädern, definiert durch Spurkranzhöhe-, -dicke und -steilheit, Hohllauf und Auswalzung an der Außenseite, eine Radreifen-/Raddicke und/oder Risse und Ausbröckelungen an der Lauffläche mess- bzw. erfassbar sind.

Vorteilhaft ist hierbei ein Messglied als am Rollenträger einer Radsatzantriebsrolle gelagerte, in Anlage an die Lauffläche des Rads des Radsatzes bringbare Messrolle ausgebildet.

Des Weiteren ist zweckmäßigerweise ein Messglied als Optiksensor ausgebildet, mittels dem eine Drehzahl des Rads messbar ist.

Außerdem kann ein Messglied als am distalen Gabelende angeordneter Optiksensor ausgebildet sein, mittels dem das Radprofil mess- bzw. erfassbar ist.

Im Folgenden wird die Erfindung anhand einer Ausführungsform unter Bezugnahme auf die Zeichnungen näher erläutert.

Es zeigen:
- Figur 1: eine perspektivische Prinzipdarstellung einer Ausführungsform einer erfindungsgemäßen Radsatzfreihebe-, -dreh- und -messvorrichtung an einem Radsatz, wobei das Schienenfahrzeug aus Darstellungsgründen nicht gezeigt ist;
- Figur 2: eine Seitenansicht der in Figur 1 gezeigten Ausführungsform der erfindungsgemäßen Radsatzfreihebe-, -dreh- und -messvorrichtung;
- Figur 3: eine Draufsicht der in den Figuren 1 und 2 gezeigten Ausführungsform der erfindungsgemäßen Radsatzfreihebe-, -dreh- und -messvorrichtung; und
- Figur 4: die Schnittdarstellung A-A in Figur 2.

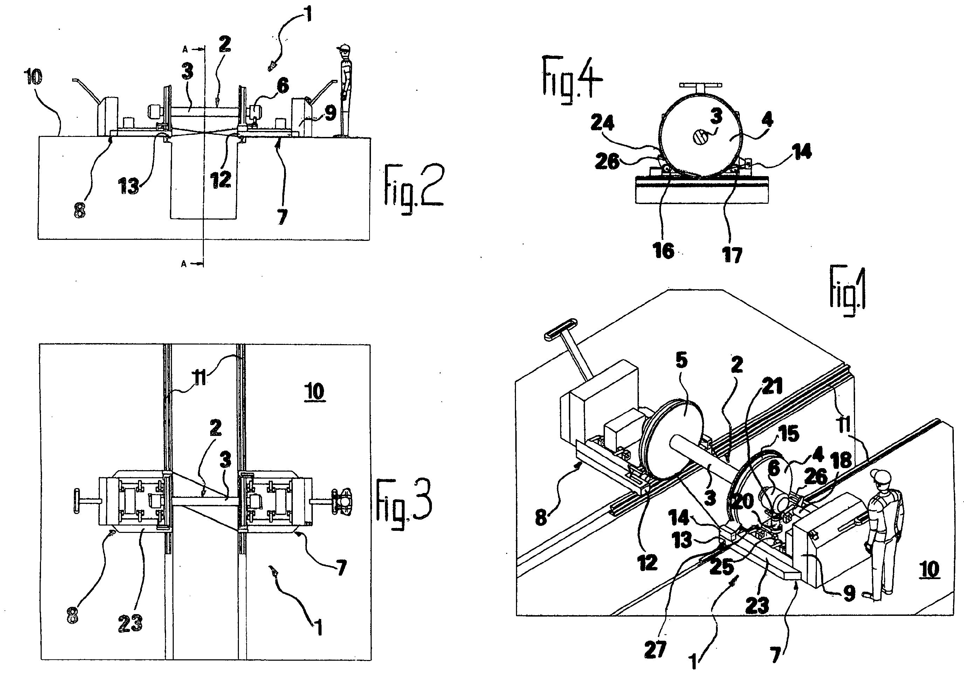

Eine anhand der Figuren 1 bis 4 im Folgenden beschriebene Ausführungsform einer erfindungsgemäßen Radsatzfreihebe-, -dreh- und -messvorrichtung 1 dient dazu, einen Radsatz 2, der in den Figuren 1 bis 3 ohne das Schienenfahrzeug, an bzw. in das er montiert ist, dargestellt ist, hinsichtlich seines betriebssicheren Zustands und hinsichtlich der Einhaltung seiner Betriebsgrenzmaße zu überprüfen.

Der in den Figuren 1 bis 4 gezeigte Radsatz 2 hat eine Radsatzachse 3, an deren beiden Endabschnitten jeweils ein Rad 4, 5 sitzt. Jedem Rad 4, 5 ist ein durch die Achsenden der Radsatzachse 3 ausgebildetes Radsatzlager 6 zugeordnet.

Die in den Figuren 1 bis 4 gezeigte Ausführungsform der erfindungsgemäßen Radsatzfreihebe-, -dreh- und -messvorrichtung 1 hat je Rad 4, 5 des Radsatzes 2 eine Vorrichtungsteileinheit 7 bzw. 8. Jede Vorrichtungsteileinheit 7, 8 hat ein als Gabelhubwagen 9 ausgebildetes Fahrwerk. Der Gabelhubwagen 9 ist auf einer Flurfläche 10 frei verfahrbar, so dass die Vorrichtungsteileinheiten 7, 8 an die beiden Räder 4, 5 des Radsatzes 2 seitlich heranfahrbar sind, bis sie die in den Figuren 1 bis 4 gezeigten Positionen einnehmen. Selbstverständlich sind die beiden Vorrichtungsteileinheiten 7, 8 voneinander getrennt und separat auf der Flurfläche 10 verfahrbar.

Beim dargestellten Ausführungsbeispiel der erfindungsgemäßen Radsatzfreihebe-, -dreh- und -messvorrichtung 1 bzw. bei deren in den Figuren dargestellten Einsatz sind Schienen 11, auf denen das in den Figuren nicht dargestellte Schienenfahrzeug bzw. der Radsatz 2 laufen, in den die Flurfläche 10 ausbildenden Boden versenkt. Der das Fahrwerk der Vorrichtungsteileinheiten 7, 8 ausbildende Gabelhubwagen 9 hat an den freien Enden seiner Gabel Stützpranken 12, an deren Unterseite jeweils ein Schienenkopf-Gegenprofil 13 ausgebildet ist, mittels denen die jeweilige Vorrichtungsteileinheit 7, 8 in Richtung der Radsatzachse 3 positionierbar ist.

Eine der beiden Stützpranken 12 bzw. eines der beiden distalen Gabelenden der Vorrichtungsteileinheit 7 bzw. 8 ist des Weiteren mit einem Optiksensor 14 versehen, mittels dem das Radprofil und die Lauffläche 15 des Rades 4, 5 des Radsatzes 2 erfass- bzw. messbar sind.

Um den Radsatz 2 zu Messzwecken in Rotation zu versetzen, ist im dargestellten Ausführungsbeispiel die Vorrichtungsteileinheit 7 der gezeigten Ausführungsform der erfindungsgemäßen Radsatzfreihebe-, -dreh- und -messvorrichtung 1 mit zwei Radsatzantriebsrollen 16, 17 ausgerüstet, die ihrerseits durch an der Vorrichtungsteileinheit 7 vorgesehene Aggregate angetrieben werden. Beide Radsatzantriebsrollen 16, 17 sind in Rollenträgern 18 gehaltert. Die Rollenträger 18 ihrerseits sind an der Vorrichtungsteileinheit 7 so gelagert, dass sie in eine schwimmende Betriebsart versetzbar sind. Entsprechend besteht die Möglichkeit, dass die Radsatzantriebsrollen 16, 17 einer Unrundheit des Rades 4 folgen können.

Jede Vorrichtungsteileinheit 7, 8 weist darüber hinaus einen Hubzylinder 20 auf, der mit einer Aufnahme 21 ausgerüstet ist, in der das der jeweiligen Vorrichtungsteileinheit 7, 8 zugeordnete Radsatzlager 6 aufnehmbar ist.

Die beiden Radsatzantriebsrollen 16, 17 sind in Kraftsteuerung nachführbar, wenn der Radsatz 2 mittels des Hubzylinders 20 der Vorrichtungsteileinheit 7 angehoben wird, um den Radsatz 2 freizuheben.

Die Vorrichtungsteileinheit 8 der in den Figuren gezeigten Ausführungsform der erfindungsgemäßen Radsatzfreihebe-, -dreh- und -messvorrichtung 1 unterscheidet sich von der vorstehend geschilderten Vorrichtungsteileinheit 7 dadurch, dass an ihr keine Radsatzantriebsrollen sondern Mitlaufrollen vorgesehen sind.

Im Falle der in den Figuren 1 bis 4 dargestellten Vorrichtungsteileinheiten 7, 8 ist das Fahrwerk bzw. der Gabelhubwagen 9 so mit einem Grundkörper 23 ausgestaltet, dass sich dieser bei der Positionierung der jeweiligen Vorrichtungsteileinheit 7, 8 am ihr zugeordneten Rad 4, 5 des Radsatzes 2 großflächig auf der Flurfläche 10 abstützt. Hierdurch sind die im Betrieb der Vorrichtungsteileinheiten 7, 8 auf diese einwirkenden Kräfte in den Grund ableitbar.

Die Vorrichtungsteileinheiten 7, 8 sind mit dem Optiksensor 14 und optischen und mechanischen Messgliedern 24, 25 ausgerüstet, mittels denen der zu prüfende Radsatz 2 hinsichtlich seines Rad-Rückenabstands, der Raddurchmesser in der Laufkreisebene der beiden Radscheiben, der Rundlaufabweichung in der Laufkreisebene an beiden Rädern 4, 5, des Vorhandenseins und des Ausmaßes von Flachstellen, des Radprofils an beiden Rädern 4, 5 - definiert durch Spurkranzhöhe, -dicke und - steilheit, Hohllauf und Auswalzung an der Außenseite -, der Radreifen-/Raddicke und von Rissen und Ausbröckelungen an der Lauffläche 15 der Räder 4, 5 mess- und erfassbar sind.

Das als Messrolle 24 ausgestaltete Messglied 24 ist mittels einer Halterung 26, die am Rollenträger 18 der Radantriebsrolle 16 sitzt, gehaltert und in Anlage an die Lauffläche 15 des Rades 4 bringbar.

Des Weiteren ist in Figur 1 das als Optiksensor 25 ausgestaltete Messglied 25 gezeigt, mittels dem im Zusammenwirken mit einem radseitigen Reflexionsglied 27 die Drehzahl des Rades 4 messbar ist.

Zur Durchführung der Überprüfung des Radsatzes 2 wird die Vorrichtungsteileinheit 7 seitlich an das Rad 4 des Radsatzes 2 und die Vorrichtungsteileinheit 8 seitlich an das Rad 5 des Radsatzes 2 herangefahren. Dort werden die beiden Vorrichtungsteileinheiten 7, 8 positioniert, indem sich ihre Stützpranken 12 vor und hinter dem Rad 4 bzw. 5 auf dem Schienenkopf, mit dem ihr Schienenkopf-Gegenprofil 13 in Eingriff gerät, absetzen. Hierdurch wird die Positionierung der Vorrichtungsteileinheiten 7, 8 in Richtung der Radsatzachse 3 bewerkstelligt.

Simultan legt sich der Grundkörper 23 der beiden Vorrichtungsteileinheiten 7, 8 großflächig auf der Flurfläche 10 bzw. auf dem Werkstattboden ab, um die im Betrieb der erfindungsgemäßen Radsatzfreihebe-, -dreh- und -messvorrichtung auftretenden Stützkräfte abzuleiten.

Die beiden Vorrichtungsteileinheiten 7, 8 werden über geeignete elektrische Anschlüsse an eine elektrische Energieversorgung angeschlossen. Auch eine Druckluftversorgung erfolgt über ein in der betreffenden Werkstatt vorhandenes Werkstattnetz.

Danach werden die beiden Radsatzantriebsrollen 16, 17 der Vorrichtungsteileinheit 7 synchron an die Lauffläche 15 des Rads 4 im äußeren Bereich mit ca. 20 bis 30 % der Radlast angestellt, womit die Vorrichtungsteileinheit 7 in Bezug auf die Mitte des Radsatzes 2 positioniert wird. Mit dem in der Vorrichtungsteileinheit 7 integrierten Hubzylinder 20, der unmittelbar am Hubzylinder mit selbstsperrenden Sicherheitsventilen ausgerüstet ist, wird der Radsatz 2 unten an seinem Radsatzlager 6 aufgenommen und automatisch um 3mm bis 10mm, je nach zu erwartendem Rundlauffehler, freigehoben. Die beiden Radsatzantriebsrollen 16, 17 werden hierbei in Kraftsteuerung nachgeführt.

Ein in den Figuren nicht gezeigtes Bedienpendel mit den erforderlichen Steuer- und Anzeigefunktionen dient dabei zum Ansteuern der Funktionen.

Wenn nun die Vorrichtungsteileinheit 8, die hinsichtlich des Heranfahr- und des Hebevorgangs in gleicher Weise funktioniert, über eine angesteckte Kabelverbindung oder ggf. über eine Bluetoothverbindung ebenfalls meldet, dass der Radsatz 2 freigehoben ist, kann der Radsatz 2 über die beiden Radsatzantriebsrollen 16, 17 der Vorrichtungsteileinheit 7 rotiert werden.

Hierbei werden die Rollenträger 18 der beiden Radsatzantriebsrollen 16, 17 in schwimmende Betriebsart versetzt. Entsprechend folgen die Radsatzantriebsrollen 16, 17 einer Unrundheit des Rades 4, so dass eine sichere Halterung der Radsatzlager 6 in den Aufnahmen 21 der Hubzylinder 20 gewährleistet bleibt und das Messergebnis nicht verfälscht wird.

## Patentansprüche

1. Radsatzmessvorrichtung für Radsätze (2) von Schienenfahrzeugen, mittels der die Radsätze (2) von Schienenfahrzeugen in einem in den Schienenfahrzeugen eingebauten Zustand auf betriebssicheren Zustand und Einhaltung von Betriebsgrenzmaßen überprüfbar sind, **dadurch gekennzeichnet, dass** die Radsatzmessvorrichtung (1) zwei voneinander getrennte und getrennt voneinander flurverfahrbare Vorrichtungsteileinheiten (7, 8) aufweist, die jeweils seitlich an den Radsatz (2) heranschiebbar und in der an dem Radsatz (2) herangeschobenen Stellung positionierbar sind, und dass die Radsatzmessvorrichtung als Radsatzfreihebe- und -drehvorrichtung ausgebildet ist, wobei beide Vorrichtungsteileinheiten (7, 8) als Radsatzfreihebevorrichtung und zumindest eine Vorrichtungsteileinheit (7) als Radsatzdreh- und -messvorrichtung ausgebildet sind.

2. Radsatzfreihebe-, -dreh- und -messvorrichtung für Radsätze (2) von Schienenfahrzeugen nach Anspruch 1, deren beide Vorrichtungsteileinheiten (7, 8) als Radsatzfreihebe- und - messvorrichtung und bei der zumindest eine Vorrichtungsteileinheit (7) als Radsatzdrehvorrichtung ausgebildet sind bzw. ist.

3. Radsatzfreihebe-, -dreh- und -messvorrichtung für Radsätze (2) von Schienenfahrzeugen nach Anspruch 1 oder 2, deren beide Vorrichtungsteileinheiten (7, 8) jeweils ein integriertes Fahrwerk (9) aufweisen, mittels dem sie flurverfahr- und seitlich an den Radsatz (2) heranfahrbar sind.

4. Radsatzfreihebe-, -dreh- und -messvorrichtung für Radsätze (2) von Schienenfahrzeugen nach Anspruch 3, bei der die Fahrwerke (9) der Vorrichtungsteileinheiten (7, 8) Gabelhubwagen (9) sind, deren distale Gabelenden Stützpranken (12) mit einem Gegenprofil, vorzugsweise einem Schienenkopf-Gegenprofil (13) aufweisen, mittels denen die Vorrichtungsteileinheiten (7, 8) in Richtung einer Radsatzachse (3) positionierbar sind.

5. Radsatzfreihebe-, -dreh- und -messvorrichtung für Radsätze (2) von Schienenfahrzeugen nach einem der Ansprüche 3 oder 4, bei der die Vorrichtungsteileinheiten (7, 8) bzw. deren Fahrwerke (9) so ausgebildet sind, dass sie bei ihrer Positionierung in Bezug auf den Radsatz (2) großflächig auf der Flurfläche (10) abstützbar sind.

6. Radsatzfreihebe-, -dreh- und -messvorrichtung für Radsätze (2) von Schienenfahrzeugen nach einem der Ansprüche 3 bis 5, bei der die Vorrichtungsteileinheiten (7, 8) bzw. deren Fahrwerke (9) Flurabstützadapter aufweisen.

7. Radsatzfreihebe-, -dreh- und -meßvorrichtung für Radsätze (2) von Schienenfahrzeugen nach einem der Ansprüche 1 bis 6, bei der jede als Radsatzdrehvorrichtung ausgebildete Vorrichtungsteileinheit (7) zumindest eine, vorzugsweise zwei Radsatzantriebsrollen (16, 17) aufweist, die ggf. synchron an eine Lauffläche (15) eines ihr zugeordneten Rades (4) des Radsatzes (2) anstellbar ist bzw. sind und mittels der bzw. denen der Radsatz (2) drehbar ist.

8. Radsatzfreihebe-, -dreh- und -messvorrichtung für Radsätze (2) von Schienenfahrzeugen nach Anspruch 7, deren Vorrichtungsteileinheiten (7, 8) jeweils einen Hubzylinder (20) mit Aufnahme (21) aufweisen, mittels denen der Radsatz (2) an seinen Radsatzlagern (6) aufnehm- und freihebbar ist, wobei die Radsatzantriebsrollen (16, 17) zur Aufrechterhaltung ihrer Anlage an die Lauffläche (15) des ihnen zugeordneten Rades (4) des Radsatzes (2) in Kraftsteuerung nachführbar sind.

9. Radsatzfreihebe-, -dreh- und -messvorrichtung für Radsätze (2) von Schienenfahrzeugen nach Anspruch 7 oder 8, bei der die Radsatzantriebsrollen (16, 17) jeder als Radsatzdrehvorrichtung ausgebildeten Vorrichtungsteileinheit (7) mittels Rollenträgern (18) gehaltert sind, die ihrerseits schwimmend lagerbar sind.

10. Radsatzfreihebe-, -dreh- und -meßvorrichtung für Radsätze (2) von Schienenfahrzeugen nach einem der Ansprüche 1 bis 9, deren nicht als Radsatzdrehvorrichtung ausgebildete Vorrichtungsteileinheit (8) nicht angetriebene, in Anlage an die Lauffläche (15) des ihr zugeordneten Rades (5) des Radsatzes (2) bringbare Mitlaufrollen aufweist.

11. Radsatzfreihebe-, -dreh- und -messvorrichtung für Radsätze (2) von Schienenfahrzeugen nach einem der Ansprüche 1 bis 10, bei der die Anzahl ihrer Vorrichtungsteileinheiten (7, 8) an die Anzahl der Räder (4, 5) mechanisch gekoppelter Radsätze (2) anpassbar ist.

12. Radsatzfreihebe-, -dreh- und -messvorrichtung für Radsätze (2) von Schienenfahrzeugen nach einem der Ansprüche 1 bis 11, deren als Radsatzmessvorrichtung ausgebildete Vorrichtungsteileinheiten (7, 8) optische und/oder mechanische Messglieder (14, 24, 25) aufweisen, mittels denen beim zu prüfenden Radsatz (2) ein Rad-Rückenabstand, ein Raddurchmesser in der Laufkreisebene an beiden Radscheiben, eine Rundlaufabweichung in der Laufkreisebene an beiden Rädern (4, 5), ein Vorhandensein und ein Ausmaß von Flachstellen, ein Radprofil an beiden Rädern (4, 5), definiert durch Spurkranzhöhe, -dicke und -steilheit, Hohllauf und Auswalzung an der Außenseite, eine Radreifen-/Raddicke und/oder Risse und Ausbröckelungen an der Lauffläche (15) mess- bzw. erfassbar sind.

13. Radsatzfreihebe-, -dreh- und -messvorrichtung für Radsätze (2) von Schienenfahrzeugen nach Anspruch 12, bei der ein Messglied (24) als am Rollenträger (18) einer Radsatzantriebsrolle (16) gelagerte, in Anlage an die Lauffläche (15) des Rads (4) des Radsatzes (2) bringbare Messrolle (24) ausgebildet ist.

14. Radsatzfreihebe-, -dreh- und -messvorrichtung für Radsätze (2) von Schienenfahrzeugen nach Anspruch 12 oder 13, bei der ein Messglied (25) als Optiksensor (25) ausgebildet ist, mittels dem eine Drehzahl des Rads (4) messbar ist.

15. Radsatzfreihebe-, -dreh- und -messvorrichtung für Radsätze (2) von Schienenfahrzeugen nach einem der Ansprüche 12 bis 14, bei der ein Messglied (14) als am distalen Gabelende angeordneter Optiksensor (14) ausgebildet ist, mittels dem das Radprofil erfassbar ist.

## Claims

1. A wheel set measuring device for wheel sets (2) of rail vehicles, by means of which the wheel sets (2) of rail vehicles, when fitted into the rail vehicles, can be checked for a reliable operating state and the adherence of operating limits, **characterised in that** the wheel set measuring device (1) comprises two device sub-units (7, 8) separated from each other and movable along the floor separately from each other, which can each be pushed up to the wheel set (2) and positioned when pushed up to the wheel set (2), and **in that** the wheel set measuring device is configured as a wheel set lifting and rotating device, wherein both wheel set sub-units (7, 8) are configured as a wheel set lifting device and at least one wheel set sub-unit (7) is configured as a wheel set rotating and measuring device.

2. A wheel set lifting, rotating and measuring device for wheel sets (2) of rail vehicles according to claim 1, both wheel set sub-units (7, 8) of which are configured as a wheel set lifting and measuring device, and where at least one wheel set sub-unit (7) are/is configured as a wheel set rotating device.

3. The wheel set lifting, rotating and measuring device for wheel sets (2) of rail vehicles according to claim 1 or 2, both wheel set sub-units (7, 8) of which each comprise an integrated chassis (9), by means of which they can be moved along the floor and laterally up to the wheel set (2).

4. The wheel set lifting, rotating and measuring device for wheel sets (2) of rail vehicles according to claim 3, where the chassis (9) of the wheel set sub-units (7, 8) are fork lift trucks (9), the distal fork ends of which have support paws (12) with a counter-profile, preferably a rail head counter-profile (13), by means of which the wheel set sub-units (7, 8) can be positioned in direction of a wheel set axis (3).

5. The wheel set lifting, rotating and measuring device for wheel sets (2) of rail vehicles according to one of claims 3 or 4, where the wheel set sub-units (7, 8) / their chassis (9) are configured such that when positioned relative to the wheel set (2) can be supported over a wide area on the floor surface (10).

6. The wheel set lifting, rotating and measuring device for wheel sets (2) of rail vehicles according to one of claims 3 to 5, where the wheel set sub-units (7, 8) / their chassis (9) comprise floor support adapters.

7. The wheel set lifting, rotating and measuring device for wheel sets (2) of rail vehicles according to one of claims 1 to 6, where each wheel set sub-unit (7) configured as a wheel set rotating device comprises at least one, preferably two wheel set drive rollers (16, 17), which can be possibly synchronously positioned on a running surface (15) of its associated wheel (4) of the wheel set (2) and by means which the wheel set (2) is rotatable.

8. The wheel set lifting, rotating and measuring device for wheel sets (2) of rail vehicles according to claim 7, the wheel set sub-units (7, 8) of which each comprise a lifting cylinder (20) with receptacle (21), by means of which the wheel set (2) can be received and lifted at its wheel set bearings (6), wherein in order to maintain contact with the running surface (15) of the associated wheel (4) of the wheel set (2) the wheel set drive rollers (16, 17) can be tracked under power steering.

9. The wheel set lifting, rotating and measuring device for wheel sets (2) of rail vehicles according to claim 7 or 8, where the wheel set drive rollers (16, 17) of each wheel set sub-unit (7) configured as a wheel set rotating device are mounted by means of roller carriers (18) which in turn can be mounted in floating bearings.

10. The wheel set lifting, rotating and measuring device for wheel sets (2) of rail vehicles according to one of claims 1 to 9, the wheel set sub-unit (8) of which, which is not configured as a wheel set rotating device comprises non-driven idle rollers, which can be brought into contact with the running surface (15) of its associated wheel (5) of the wheel set (2).

11. The wheel set lifting, rotating and measuring device for wheel sets (2) of rail vehicles according to one of claims 1 to 10, where the number of its wheel set sub-units (7, 8) can be adapted to the number of wheels (4, 5) of mechanically coupled wheel sets (2).

12. The wheel set lifting, rotating and measuring device for wheel sets (2) of rail vehicles according to one of claims 1 to 11, the wheel set sub-units (7, 8) of which, which are configured as a wheel set measuring device, comprise optical and/or mechanical measuring elements (14, 24, 25), by means of which it is possible, for the wheelset (2) to be checked, to measure / detect a wheel-back distance, a wheel diameter in the running tread plane on both wheel discs, a concentricity deviation in the running tread plane on both wheels (4, 5), a presence and a size of wheel flats, a wheel profile on both wheels (4, 5) defined by flange height, thickness and steepness, hollow running and roll-out on the outside, a wheel tyre thickness / wheel thickness and/or cracks and chipping on the running surface (15).

13. The wheel set lifting, rotating and measuring device for wheel sets (2) of rail vehicles according to claim 12, where a measuring element (24) is configured as a measuring roller (24) mounted on the roller carrier (18) of a wheel set drive roller (16) which can be brought into contact with the running surface (15) of the wheel (4) of the wheel set (2).

14. The wheel set lifting, rotating and measuring device for wheel sets (2) of rail vehicles according to claim 12 or 13, where a measuring element (25) is configured as an optical sensor (25), by means of which a speed of the wheel (4) can be measured.

15. The wheel set lifting, rotating and measuring device for wheel sets (2) of rail vehicles according to one of claims 12 to 14, where a measuring element (14) is configured as an optical sensor (14) arranged at the distal fork end, by means of which the wheel profile can be detected.

## Revendications

1. Dispositif de mesure d'essieux montés pour essieux montés (2) de véhicules ferroviaires, au moyen duquel les essieux montés (2) de véhicules ferroviaires, dans un état monté dans les véhicules ferroviaires, peuvent être contrôlés concernant leur état de sécurité de fonctionnement et de respect de grandeurs limites de fonctionnement,
**caractérisé en ce que** le dispositif de mesure d'essieux montés (1) présente deux unités partielles de dispositif (7, 8) séparées l'une de l'autre et pouvant se déplacer séparément l'une de l'autre sur un couloir, lesquelles peuvent être respectivement rapprochées latéralement contre l'essieux monté (2) et être positionnées dans la position rapprochée contre l'essieux monté (2), et que le dispositif de mesure d'essieux montés est réalisé en tant que dispositif de rotation et de levage de libération d'essieux montés, dans lequel les deux unités partielles de dispositif (7, 8) sont réalisées en tant que dispositif de levage de libération d'essieux montés, et au moins une unité partielle de dispositif (7) en tant que dispositif de rotation et de mesure d'essieux montés.

2. Dispositif de mesure, rotation et levage de libération d'essieux montés pour essieux montés (2) de véhicules ferroviaires selon la revendication 1, dont les deux unités partielles de dispositif (7, 8) sont réalisées en tant que dispositif de mesure et de levage de libération d'essieux montés et où au moins une unité partielle de dispositif (7) est/sont réalisée(s) en tant que dispositif de rotation d'essieux montés.

3. Dispositif de mesure, rotation et levage de libération d'essieux montés pour essieux montés (2) de véhicules ferroviaires selon la revendication 1 ou 2, dont les deux unités partielles de dispositif (7, 8) présentent respectivement un mécanisme de déplacement (9) intégré au moyen duquel il est possible de les déplacer sur le couloir et de les rapprocher latéralement de l'essieux monté (2).

4. Dispositif de mesure, rotation et levage de libération d'essieux montés pour essieux montés (2) de véhicules ferroviaires selon la revendication 3, dans lequel les mécanismes de déplacement (9) des unités partielles de dispositif (7, 8) sont des chariots élévateurs à fourche (9) dont les extrémités distales de fourche présentent des pattes de support (12) avec un profil conjugué, de préférence un profil conjugué de champignon de rail (13), au moyen desquels les unités partielles de dispositif (7, 8) peuvent être positionnées en direction d'un axe d'essieux monté (3) .

5. Dispositif de mesure, rotation et levage de libération d'essieux montés pour essieux montés (2) de véhicules ferroviaires selon l'une des revendications 3 ou 4, dans lequel les unités partielles de dispositif (7, 8), ou les mécanismes de déplacement (9) de celles-ci, sont réalisées de telle sorte que lors de leur positionnement par rapport à l'essieux monté (2), elles peuvent être en appui sur la surface de couloir (10) sur une grande surface.

6. Dispositif de mesure, rotation et levage de libération d'essieux montés pour essieux montés (2) de véhicules ferroviaires selon l'une des revendications 3 à 5, dans lequel les unités partielles de dispositif (7, 8), ou les mécanismes de déplacement (9) de celles-ci, présentent des adaptateurs de support de couloir.

7. Dispositif de mesure, rotation et levage de libération d'essieux montés pour essieux montés (2) de véhicules ferroviaires selon l'une des revendications 1 à 6, dans lequel chaque unité partielle de dispositif (7) réalisée en tant que dispositif de rotation d'essieux montés présente au moins un, de préférence deux galets d'entraînement d'essieux monté (16, 17), lequel ou lesquels peut/peuvent, de manière synchrone le cas échéant, être mis en place sur une surface de roulement (15) d'une roue (4) de l'essieux monté (2) qui lui/leur est associée et au moyen duquel ou desquels l'essieux monté (2) peut tourner.

8. Dispositif de mesure, rotation et levage de libération d'essieux montés pour essieux montés (2) de véhicules ferroviaires selon la revendication 7, dont les unités partielles de dispositif (7, 8) présentent respectivement un cylindre de levage (20) avec un logement (21), au moyen desquels l'essieux monté (2) peut être saisi et libéré par levage au niveau de ses supports d'essieux monté (6), dans lequel les galets d'entraînement d'essieux monté (16, 17), pour le maintien de leur mise en place sur la surface de roulement (15) de la roue (4) de l'essieux monté (2) qui leur est associée, peuvent être asservis par servocommande.

9. Dispositif de mesure, rotation et levage de libération d'essieux montés pour essieux montés (2) de véhicules ferroviaires selon la revendication 7 ou 8, dans lequel les galets d'entraînement d'essieux monté (16, 17) de chaque unité partielle de dispositif (7) réalisée en tant que dispositif de rotation d'essieux montés sont maintenus grâce à des porte-galets (18), lesquels peuvent quant à eux être supportés de manière flottante.

10. Dispositif de mesure, rotation et levage de libération d'essieux montés pour essieux montés (2) de véhicules ferroviaires selon l'une des revendications 1 à 9, dont l'unité partielle de dispositif (8) non réalisée en tant que dispositif de rotation d'essieux montés présente des galets suiveurs non entraînés, pouvant être amenés en butée contre la surface de roulement (15) de la roue (5) de l'essieux monté (2) qui leur est associée.

11. Dispositif de mesure, rotation et levage de libération d'essieux montés pour essieux montés (2) de véhicules ferroviaires selon l'une des revendications 1 à 10, dans lequel le nombre de ses unités partielles de dispositif (7, 8) peut être adapté au nombre de roues (4,5) d'essieux montés (2) accouplés mécaniquement.

12. Dispositif de mesure, rotation et levage de libération d'essieux montés pour essieux montés (2) de véhicules ferroviaires selon l'une des revendications 1 à 11, dont les unités partielles de dispositif (7, 8) réalisées en tant que dispositif de mesure d'essieux montés présentent des organes de mesure optiques et/ou mécaniques (14, 24, 25) au moyen desquels il est possible de mesurer ou détecter, au niveau de l'essieux monté (2) à contrôler, un espacement entre dos de roues, un diamètre de roue dans le plan de surface de roulement au niveau des deux disques de roue, un écart d'excentricité dans le plan de surface de roulement au niveau des deux roues (4, 5), la présence et l'ampleur de méplats, un profil de roue au niveau des deux roues (4, 5), défini par la hauteur, épaisseur et pente du boudin de roue, le roulement sans adhérence et l'écrasement sur le côté extérieur, une épaisseur de roue/bandage et/ou des fissures et des effritements sur la surface de roulement (15).

13. Dispositif de mesure, rotation et levage de libération d'essieux montés pour essieux montés (2) de véhicules ferroviaires selon la revendication 12, dans lequel un organe de mesure (24) est réalisé en tant que roulette de mesure (24) montée sur le porte-galet (18) d'un galet d'entraînement d'essieux monté (16), pouvant être amenée en butée contre la surface de roulement (15) de la roue (4) de l'essieux monté (2).

14. Dispositif de mesure, rotation et levage de libération d'essieux montés pour essieux montés (2) de véhicules ferroviaires selon la revendication 12 ou 13, dans lequel un organe de mesure (25) est réalisé en tant que capteur optique (25) au moyen duquel il est possible de mesurer une vitesse de rotation de la roue (4) .

15. Dispositif de mesure, rotation et levage de libération d'essieux montés pour essieux montés (2) de véhicules ferroviaires selon l'une des revendications 12 à 14, dans lequel un organe de mesure (14) est réalisé en tant que capteur optique (14) disposé sur l'extrémité distale de fourche, au moyen duquel le profil de roue peut être détecté.
